# FASCICULE DE BREVET EUROPEEN

(11) **EP 1 517 516 B1**
(45) Date de publication et mention de la délivrance du brevet: **19.12.2007**
(21) Numéro de dépôt: 04292238.5
(22) Date de dépôt: 17.09.2004
(51) Int. Cl.: H04L 29/06

(54) **Réseau local évolutif associé à un immeuble**
Erweiterbares, lokales, mit einem Gebäude assoziiertes, Netz
Evolutive local network associated to a building

(30) Priorité: 19.09.2003 FR 0311008
(43) Date de publication de la demande: 23.03.2005
(73) Titulaire: Alcatel Lucent, 75008 Paris (FR)
(72) Inventeur: Clevy, Laurent, 28000 Chartres (FR); Fontaine, Patrick, 75013 Paris (FR)
(74) Mandataire: Korakis-Ménager, Sophie

(56) Documents cités:
- US-B1- 6 396 531

## Description

La présente invention est relative aux systèmes d'accès à un immeuble. Plus particulièrement, elle concerne un réseau local associé à un immeuble.

Un immeuble possède un ensemble de locaux particuliers, qui peuvent être des locaux résidentiels, des locaux de bureaux etc., et au moins un local commun situé devant la porte d'accès à l'immeuble.

Typiquement, un système d'accès à un immeuble comprend un terminal, situé devant la porte d'accès à l'immeuble, c'est-à-dire dans le local commun et un terminal par local particulier. Ces terminaux sont connectés par un réseau local, permettant la communication entre un terminal équipant un local particulier et le terminal équipant le local commun.

Grâce à la communication ainsi établie, l'utilisateur du terminal dans le local particulier peut décider d'ouvrir ou non la porte d'accès à l'immeuble.

Toutefois, un tel système dispose de plusieurs inconvénients. Notamment, les services offerts par un tel système sont limités à l'appel d'un terminal particulier par le terminal public, et la mise en communication. Or, bien souvent, personne n'est présent dans les locaux lorsque quelqu'un chercher à le visiter. Aucun contact n'est alors possible, et dans certains immeubles, il n'y a aucun moyen pour le visiteur de laisser même un message pour les habitants du local visité.

Document US 6396531 divulgue le préambule des revendications 1 et 9.

Le but de l'invention est de maximiser les chances de contacts entre visiteurs et visités.

Un autre but de l'invention est de proposer un réseau local associé à un immeuble qui soit évolutif, permettant ainsi d'ajouter de nouveaux services ou de modifier les services existants.

Pour ce faire, l'invention a pour premier objet une passerelle entre un réseau local associé à un immeuble constitué d'une pluralité de locaux particuliers et d'au moins un local commun, et un réseau Internet. Le (ou les) local commun et au moins certains desdits locaux particuliers sont équipés de terminaux multimédias connectés au réseau local. La passerelle se caractérise en ce qu'elle comporte des moyens d'exécution pour exécuter des services évolués téléchargés depuis un serveur accessible au travers du réseau Internet.

Un de ces services est prévu pour:
- détecter un appel vers un terminal multimédia équipant un local particulier, depuis le terminal multimédia équipant le local public, et
- transférer l'appel vers un dispositif déterminé par les informations utilisateurs, et, le cas échant, les flux multimédias associés audit appel.

Selon un mode de réalisation, la passerelle comporte de surcroît des services d'autonomie, installés à demeure dans la passerelle, et exécutable par les moyens d'exécution.

La passerelle peut en outre disposer d'une base d'informations utilisateurs, permettant le déclenchement ou le fonctionnement des services (d'autonomie ou évolués), par un utilisateur d'un de ces terminaux.

Le dispositif en question peut être un terminal multimédia équipant un local particulier distinct du local équipé du terminal multimédia appelé. Ce peut aussi être un dispositif accessible au travers dudit réseau internet.

Un service peut également être prévu pour déterminer un identificateur de l'utilisateur du terminal multimédia équipant le local commun, et pour déclencher une action en fonction des informations utilisateurs.

Selon une mise en oeuvre particulière de l'invention, la passerelle possède un moyen de commande d'une ou plusieurs portes d'accès à l'immeuble, éventuellement au travers du terminal multimédia équipant le local commun. Les services sont alors à même de commander l'ouverture de la (ou des) porte d'accès en collaboration avec ce moyen de commande.

Un service peut être prévu pour déterminer un code fourni par l'utilisateur du terminal multimédia équipant le local commun et pour commander l'ouverture de la (ou des) porte d'accès, si le code est un code d'accès valide, ces codes valides ayant une validité limitée dans le temps.

L'invention a également pour objet un serveur pour fonctionner en collaboration avec la passerelle de l'invention. Ce serveur se caractérise en ce qu'il comporte une base de services évolués et des moyens pour télécharger un ou plusieurs services évolués contenus dans cette base vers la passerelle, sur requête de celle-ci.

Selon un mode de réalisation, le serveur peut posséder en outre, une base d'informations utilisateurs synchronisée avec la base d'informations utilisateurs contenue dans la passerelle.

Ce serveur peut aussi disposer d'une interface utilisateur, accessible par le réseau Internet, permettant de consulter ou modifier les informations utilisateurs. Cette interface utilisateur peut être implémentée par un serveur de type HTTP.

Le serveur peut aussi être prévu pour disposer de moyens pour requérir, via cette interface utilisateur, un code valide permettant l'ouverture de la (ou des) porte(s) d'accès.

La figure 1 illustre l'architecture générale du réseau local associé à un mode de réalisation de l'invention ainsi que le contexte dans lequel il s'inscrit.

La figure 2 schématise la passerelle selon un mode de réalisation de l'invention, et ses interactions avec le serveur.

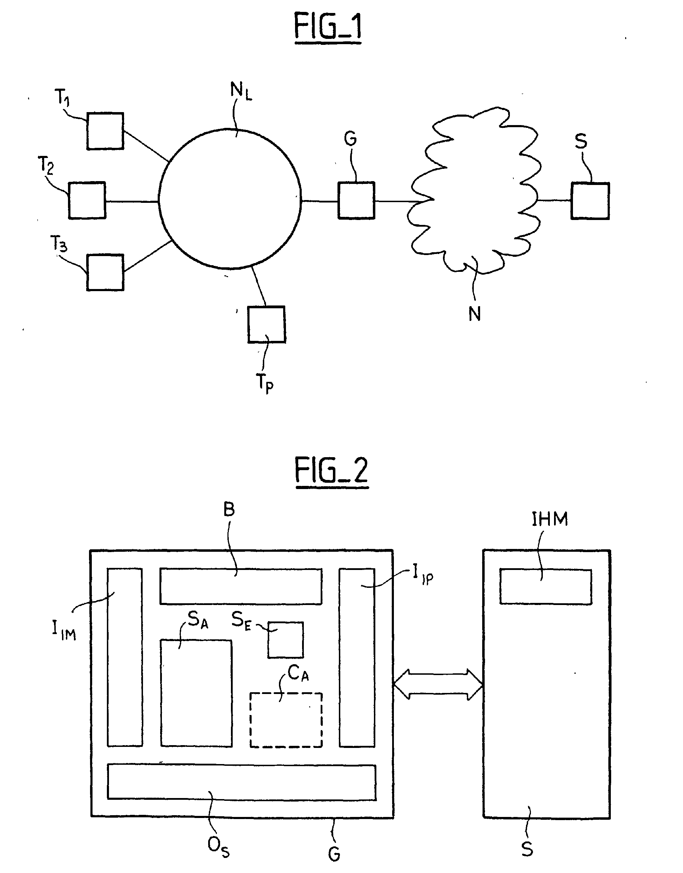

Sur la figure 1, on a représenté le réseau local N_{L} associé à un immeuble. À ce réseau local sont connectés des terminaux multimédias particuliers T₁, T₂, T₃..., équipant des locaux particuliers, et au moins un terminal T_{P} équipant un local commun.

Un tel réseau local peut être mis en oeuvre selon différentes technologies. Il peut s'agir d'un réseau IP (*Internet Protocol*), d'un réseau Ethernet™, d'un réseau CPL (pour « courant porteur en ligne »), etc.

Ce réseau local N_{L} est de surcroît connecté à une passerelle G.

Cette passerelle G est connectée à un réseau N, auquel est également connecté un serveur S. Ce réseau N peut notamment être un réseau de type Internet, c'est-à-dire un réseau de données basé sur une pile protocolaire TCP/IP et connecté aux autres réseaux Internet du monde.

La passerelle G peut télécharger des services évolués depuis le serveur S, à travers le réseau N. Elle possède des moyens d'exécution de ces services, qui sont des modules logiciels.

La figure 2 schématise l'architecture fonctionnelle interne de la passerelle G.

Celle-ci comporte un système d'exploitation OS (pour Operating System, en langue anglais), permettant d'exécuter les services proposés par la passerelle.

Les services peuvent être des services évolués S_{E} téléchargés depuis le serveur S, ou bien des services d'autonomie S_{A}, installés à demeure dans la passerelle. Ces services d'autonomie, optionnels, permettent à la passerelle G d'avoir une certaine autonomie vis-à-vis du serveur S, et notamment de continuer à fournir certains services - les plus courants - lors d'une rupture accidentelle de la connexion avec le serveur S.

Selon un mode de réalisation, les services d'autonomie S_{A} sont directement exécutables par le système d'exploitation OS, tandis qu'une couche d'adaptation CA permet l'exécution des services évolués S_{E}. Selon un autre mode de réalisation, tout ou partie des services d'autonomie S_{A} sont exécutables par cette couche d'adaptation CA.

Par exemple, cette couche d'adaptation peut être une machine virtuelle Java™, et les services évolués S_{E}, et éventuellement certains services d'autonomie S_{A} peuvent être des *applets* Java.

Selon un autre exemple de mise en oeuvre, les services évolués S_{E} et éventuellement certains services d'autonomie S_{A} sont des modules logiciels RPC (Remote Procedure Call), tels que définis par le RFC 1050 de l'IETF (*Internet Engineer Task Force*).

La passerelle G dispose de surcroît d'interfaces I_{Im} et I_{IP}, respectivement avec le réseau local N_{L} associé à l'immeuble et avec le réseau Internet N.

La passerelle G peut de plus disposer d'une base d'informations utilisateurs B. Cette base B permet le déclenchement et/ou le fonctionnement des services S_{E} et S_{A}. Elle peut notamment contenir des informations relatives aux conditions de déclenchement des services.

Selon un mode de réalisation de l'invention, les informations mémorisées dans la base d'informations utilisateurs B sont synchronisées avec une base contenue dans le serveur S. Autrement dit, le serveur S dispose d'une copie de la base d'informations utilisateurs B ou d'une partie de celle-ci, et chaque modification dans la base B ou dans sa copie est automatiquement répercutée dans l'autre. Cette synchronisation peut s'effectuer au travers de l'interface I_{IP} avec le réseau Internet N.

Il est de même possible de pourvoir le serveur S d'une interface utilisateur IHM permettant de consulter ou modifier les informations utilisateurs contenues dans la copie de la base, ou dans une partie de cette copie. Préférentiellement, cette interface utilisateur est conforme au protocole http (*HyperText Transfer Protocol*), au protocole I-mode™ de la société DoCoMo, au protocole WAP (*Wireless Application Protocol*) etc.

Il est alors possible de consulter ou modifier la configuration des services mis en place par un utilisateur d'un terminal multimédia, même lorsqu'il est hors de chez lui. Il lui suffit pour cela d'avoir accès au réseau internet N, à partir d'un terminal de communication.

Basée sur une telle architecture, la passerelle selon l'invention peut fournir différents services évolués, à la demande. Il est aussi possible pour l'opérateur du serveur S, d'ajouter des nouveaux services évolués, qui seront automatiquement téléchargées sur la passerelle G, par exemple lorsqu'un terminal multimédia y fera appel.

Grâce à l'invention, il devient aussi possible pour l'opérateur de fournir différents abonnements à des ensembles de services : il peut par exemple fournir uniquement des services évolués « de base » pour un premier tarif, et davantage de services évolués pour un second tarif, plus élevé que le premier.

Selon un mode de réalisation de l'invention, la passerelle dispose de moyens de commande d'une ou plusieurs portes d'accès à l'immeuble. Ces moyens de commande peuvent ou non fonctionner au travers du terminal multimédia équipant le local commun.

Les services évolués S_{E} ou d'autonomie S_{A} peuvent être aptes à commander l'ouverture de cette ou de ces portes d'accès, en collaboration avec ces moyens de commande.

Un exemple de service fourni par la passerelle peut être le transfert d'appel. Ce service peut être un service d'autonomie ou un service évolué, c'est-à-dire téléchargé depuis le serveur S.

Le service est prévu pour détecter un appel vers un terminal multimédia équipant un local particulier, depuis le terminal multimédia équipant ledit local public.

Soit de façon systématique, soit après un nombre de sonneries configurable, le service peut transférer l'appel vers un dispositif donné et, le cas échant, les flux multimédias associés à l'appel.

Le dispositif en question peut être n'importe quel terminal, mais préférentiellement un terminal multimédia capable de supporter les flux multimédias associés à l'appel, c'est-à-dire, typiquement, de la vidéo et un flux audio.

L'adresse de ce dispositif, le nombre de sonneries et d'autres paramètres peuvent être stockés dans la base d'informations utilisateurs B. La mémorisation de ces informations peut être effectuée par l'utilisateur depuis son terminal multimédia équipant son local particulier.

Du fait de la synchronisation avec la base d'informations contenue dans le serveur S, l'utilisateur peut en outre effectuer la mémorisation, ou bien la modifier, à partir de l'interface utilisateur IHM de ce serveur S.

Grâce à un tel service, le visiteur peut être mis en contact avec la personne visitée, même en son absence : les deux personnes pourront ainsi convenir d'un autre rendez-vous ou bien se communiquer des informations qu'elles avaient à se communiquer.

Selon un mode de réalisation de ce service, le dispositif vers lequel l'appel est transféré est un terminal multimédia équipant un local distinct du local équipé du terminal multimédia appelé.

Un tel service est particulièrement utile lorsqu'une personne résidant dans un premier local rend visite à un second local. Malgré son absence de son domicile, elle peut demander le transfert d'appels vers le terminal multimédia du local visité. Elle pourra ainsi bénéficier des mêmes fonctions que depuis chez elle, et notamment commander l'ouverture de la porte d'accès.

Mais l'invention est susceptible de s'appliquer au transfert vers tout type de terminaux multimédias, y compris à des terminaux multimédias accessibles via le réseau Internet N.

Un autre service fourni par la passerelle G peut être le déclenchement d'une action en fonction d'un identificateur du visiteur.

Le service est prévu pour tout d'abord déterminer un identificateur de l'utilisateur du terminal multimédia équipant le local commun. Cet identificateur peut par exemple être un code entré par l'utilisateur au moyen d'un clavier, ou d'un écran tactile disposé sur ce terminal multimédia. Il pourrait aussi s'agir du nom de l'utilisateur, saisi sous la forme d'une chaîne alphanumérique. D'autres moyens d'identifications peuvent toutefois être prévus.

En fonction de ce code, et d'un local appelé, une action peut être déclenchée par le service.

Par exemple, une personne résidant dans un local particulier peut configurer le service pour délivrer un message préenregistré à certains visiteurs, en son absence : ainsi, il associe à l'identificateur de ces visiteurs, l'action de production de ce message.

Comme précédemment expliqué pour le service de transfert d'appels, cette association, le contenu du message et d'autres paramètres peuvent être mémorisés par le résidant au moyen de son terminal multimédia ou de l'interface utilisateur du serveur.

Le service peut aussi être prévu pour associer à l'identificateur de certains visiteurs, l'action de transférer leurs appels. Ainsi, il est possible de ne transférer les appels que de certaines personnes bien identifiées.

Un autre service peut être un service d'ouverture de la (ou des) porte d'accès, par code temporaire.

Le service détermine tout d'abord un code fourni par l'utilisateur du terminal multimédia équipant le local commun. Ce code peut être entré au moyen d'un clavier, d'un écran tactile ou de tout autre moyen.

Puis, le service peut commander l'ouverture de la (ou des) porte d'accès, si le code est un code d'accès valide, ces codes valides ayant une validité limitée dans le temps.

Selon un mode de réalisation de ce service, le serveur S dispose de moyens pour permettre des requêtes de tels codes valides, via l'interface utilisateurs IHM.

Ainsi, il est possible pour un visiteur institutionnel de requérir un code temporaire (par exemple, valable une unique journée), qui lui permettra d'ouvrir la ou les portes d'accès à l'immeuble. Un tel visiteur institutionnel peut être un préposé du fournisseur d'électricité de l'immeuble, ou d'eau, de gaz etc. qui peut être amené à procéder à des vérifications des installations ou à des relevés de compteurs.

## Revendications

1. Passerelle (G) entre un réseau local (N_{L}) associé à un immeuble constitué d'une pluralité de locaux particuliers et d'au moins un local commun, et un réseau Internet (N), ledit local commun et ou moins certains desdits locaux particuliers étant équipés de terminaux multimédias (T₁, T₂, T₃, Tₚ...) connectés audit réseau local (N_{L}), ladite passerelle étant **caractérisée en ce qu**'elle comporte des moyens d'exécution pour exécuter des services évolués téléchargés depuis un serveur (S), accessible au travers dudit réseau Internet (N), et dont l'un au moins est prévu pour :
• détecter un appel vers un terminal multimédia équipant un local particulier, depuis le terminal multimédia équipant ledit local commun, et
• transférer ledit appel vers un dispositif déterminé par des informations utilisateurs, et, le cas échant, les flux multimédias associés audit appel.

2. Passerelle selon la revendication précédente, comportant de surcroît des services d'autonomie, installés à demeure dans ladite passerelle, et exécutable par lesdits moyens d'exécution.

3. Passerelle selon l'une des revendications précédentes, comportant en outre une base d'informations utilisateurs, permettant le déclenchement ou le fonctionnement desdits services, par un utilisateur d'un desdits terminaux.

4. Passerelle selon l'une des revendications 1 à 4, dans lequel ledit dispositif est un terminal multimédia équipant un local particulier distinct du local équipé du terminal multimédia appelé.

5. Passerelle selon la revendication 4, dans lequel ledit dispositif est accessible au travers dudit réseau internet.

6. Passerelle selon l'une des revendications précédentes, dans laquelle au moins un desdits services est prévu pour déterminer un identificateur de l'utilisateur dudit terminal multimédia équipant ledit local commun, et pour déclencher une action en fonction desdites informations utilisateurs.

7. Passerelle selon l'une des revendications précédentes, possédant un moyen de commande d'une ou plusieurs portes d'accès audit immeuble, éventuellement au travers dudit terminal multimédia équipant ledit local commun, lesdits services étant à même de commander l'ouverture de ladite ou desdits portes d'accès en collaboration avec ledit moyen de commande.

8. Passerelle selon la revendication précédente, dans lequel au moins un desdits services est prévu pour déterminer un code fourni par l'utilisateur dudit terminal multimédia équipant ledit local commun et pour commander l'ouverture de ladite ou desdites portes d'accès, si ledit code est un code d'accès valide, lesdits codes valides ayant une validité limitée dans le temps.

9. Serveur pour fonctionner en collaboration avec une passerelle selon l'une des revendications suivantes, ledit serveur étant **caractérisé en ce qu**'il comporte une base de services évolués et des moyens pour télécharger un ou plusieurs services évolués contenus dans cette base vers ladite passerelle, sur requête de celle-ci.

10. Serveur selon la revendication précédente, comportant en outre, une base d'informations utilisateurs synchronisée avec la base d'informations utilisateurs contenue dans ladite passerelle.

11. Serveur selon la revendication précédente, comportant en outre une interface utilisateur, accessible par ledit réseau Internet, permettant de consulter ou modifier lesdites informations utilisateurs.

12. Serveur selon la revendication précédente, dans lequel ladite interface utilisateur est implémentée par un serveur de type HTTP.

13. Serveur selon l'une des revendications 11 ou 12, adapté pour collaborer avec une passerelle selon la revendication 8, dans lequel des moyens sont prévus pour requérir, via ladite interface utilisateur, un code valide permettant l'ouverture de ladite ou desdites portes d'accès.

## Claims

1. A gateway (G) between an Internet network (N) and a local network (N_{L}) associated with a building constituted by a plurality of private premises and at least one common area, said common area and at least some of said private premises having multimedia terminals (T₁, T₂, T₃, T_{P}, ...) connected to said local network (N_{L}), raid gateway being **characterized in that** it comprises execution means for executing extended services downloaded from a server (S), accessible via said Internet network (N), and having at least one of these services designed:
.to detect a call to a multimedia terminal in a private premises from the multimedia terminal in said common area; and
.to transfer said call to a device determined by said user data, and where appropriate also to transfer the multimedia streams associated with said call.

2. A gateway according to claim 1, further comprising independent services, permanently installed in said gateway, and executable by said execution means.

3. A gateway according to claim 1, further comprising a user database, enabling said services to be triggered or operated by a user of one of said terminals.

4. A gateway according to any one of claims 1 to 3, in which said device is a multimedia terminal in a private premises distinct from the premises having the called multimedia terminal.

5. A gateway according to claim 4, in which said device is accessible via said Internet network.

6. A gateway according to any preceding claim, in which at least one of said services is designed to determine an identifier of the user of said multimedia terminal in said common area, and to trigger an action as a function of said user data,

7. A gateway according to any preceding claim, possessing control means for controlling one or more access doors of said building, possibly via said multimedia terminal in said common area, said services being capable of causing said access door(s) to be opened in co-operation with said control means.

8. A gateway according to the preceding claim, in which at least one of said services is designed to determine a code supplied by the user of said multimedia terminal in said common area and to cause said access door(s) to open if said code is a valid access code, said valid code having validity that is limited in time.

9. A server for operating in co-operation with a gateway according to any preceding claim, said service being **characterized in that** it includes a base of extended services and means for downloading one or more extended services contained in said base to said gateway, on request therefrom.

10. A server according to the preceding claim, further including a user database synchronized with the user database contained in said gateway.

11. A server according to the preceding claim, further including a user interface that is accessible via said Internet network, the interface enabling said user data to be consulted or modified.

12. A server according to the preceding claim, in which said user interface is implemented by an HTTP type server,

13. A server according to claim 11 or claim 12, adapted to co-operate with a gateway according to claim 8, in which means are designed to request a valid code to cause said access door(s) to open, via said user interface.

## Patentansprüche

1. Gateway (G) zwischen einem lokalen Netz (N_{L}), das mit einem Gebäude assoziiert ist, welches aus einer Vielzahl von privaten Räumlichkeiten und mindestens einem gemeinsamen Raum besteht, und einem Internet-Netz (N), wobei dieser gemeinsame Raum und mindestens einige dieser privaten Räume mit Multimedia-Endgeräten (T₁, T₂, T₃, Tₚ....) ausgestattet sind, die an dieses lokale Netz (N_{L}) angeschlossen sind, wobei dieses Gateway **dadurch gekennzeichnet ist, dass** es Ausführungsmittel einschließt, um hoch entwickelte Dienste auszuführen, die von einem Server (S) herunter geladen werden, der durch dieses Internet-Netz (N) zugänglich ist, wovon mindestens einer dieser Dienste dafür vorgesehen ist:
• einen Ruf zu erfassen, der von dem Multimedia-Endgerät aus, mit dem dieser öffentliche Raum ausgestattet ist, an ein Multimedia-Endgerät einer privaten Räumlichkeit geht, und
• diesen Ruf an eine Vorrichtung zu übertragen, die von den Nutzerinformationen und gegebenenfalls von den mit diesem Ruf verknüpften Multimediaströmen bestimmt wird.

2. Gateway gemäß dem vorstehenden Anspruch, das außerdem Autonomiedienste einschließt, die auf Dauer in diesem Gateway installiert sind, und von diesen Ausführungsmitteln ausgeführt werden können.

3. Gateway gemäß einem der vorstehenden Ansprüche, das außerdem eine Benutzerinformationsbank einschließt, die die Auslösung oder den Betrieb dieser Dienste durch einen Benutzer eines dieser Endgeräte ermöglicht.

4. Gateway gemäß einem der Ansprüche 1 bis 4, bei dem diese Vorrichtung ein Multimedia-Endgerat ist, mit dem ein privater Raum ausgestattet ist, der von dem Raum verschieden ist, der mit dem angerufenen Multimedia-Endgerät ausgestattet ist.

5. Gateway gemäß Anspruch 4, bei dem diese Vorrichtung durch dieses Internet-Netz zugänglich ist.

6. Gateway gemäß einem der vorstehenden Ansprüche bei dem mindestens einer dieser Dienste dafür vorgesehen ist, eine Kennung des Nutzers dieses Multimedia-Endgeräts, mit dem der gemeinsame Raum ausgestattet ist, zu bestimmen und um eine Maßnahme abhängig von diesen Benutzerinformationen auszulösen.

7. Gateway gemäß einem der vorstehenden Ansprüche, das ein Mittel zur Steuerung einer Zugangstür oder mehrerer Zugangstüren zu diesem Gebäude besitzt, eventuell durch dieses Multimedia-Endgerät, mit dem dieser gemeinsame Raum ausgestattet ist, wobei diese Dienste im Stande sind, das Öffnen dieser Zugangstür oder dieser Zugangstüren im Zusammenspiel mit diesem Mittel zur Steuerung zu steuern.

8. Gateway gemäß dem vorstehenden Anspruch, bei dem mindestens einer diese Dienste dafür vorgesehen ist, einen Code zu bestimmen, der vom Benutzer dieses Multimedia-Endgeräts geliefert wird, mit dem dieser gemeinsame Raum ausgestattet ist, und um das Öffnen dieser Zugangstür oder dieser Zugangstüren zu steuern, falls es sich bei diesem Code um einen gültigen Zugangscode handelt, da diese gültigen Codes eine zeitlich begrenzte Gültigkeit besitzen.

9. Server, der mit einem Gateway gemäß einem der folgenden Ansprüche zusammen wirken soll, wobei dieser Server **dadurch gekennzeichnet ist, dass** er eine Bank hoch entwickelter Dienste einschließt und Mittel, um einen oder mehrere hoch entwickelte Dienste, die in dieser Bank enthalten sind, auf Anforderung des Gateways an dieses herunter zu laden.

10. Server gemäß dem vorstehenden Anspruch, der außerdem eine Benutzerinformationsbank einschließt, die mit der in diesem Gateway enthaltenen Benutzerinformationsbank synchronisiert ist.

11. Server gemäß dem vorstehenden Anspruch, der außerdem eine Benutzerschnittstelle einschließt, die über dieses Internet-Netz zugänglich ist, und es gestattet, diese Benutzerinformationen abzufragen oder abzuändern.

12. Server gemäß dem vorstehenden Anspruch, bei dem diese Benutzerschnittstelle durch einen Server vom Typ HTTP implementiert wird.

13. Server gemäß einem der Ansprüche 11 oder 12, der geeignet ist mit einem Gateway gemäß Anspruch 8, zusammen zu wirken, bei dem Mittel vorgesehen sind, um über diese Benutzerschnittstelle einen gültigen Code anzufordern, der das Öffnen dieser Zugangstür oder dieser Zugangstüren ermöglicht.
